# EUROPEAN PATENT APPLICATION

(11) **EP 4 783 631 A1**
(43) Date of publication of application: **29.07.2026**
(21) Application number: 23960054.7
(22) Date of filing: 27.12.2023
(51) Int. Cl.: H04W 8/24

(54) **BATTERY DATA UPDATING APPARATUS, BATTERY DATA UPDATING METHOD, AND DEVICE AND STORAGE MEDIUM**

(30) Priority: 29.11.2023 CN 202311621682
(71) Applicant: Sungiant Automotive Electronics Co., Ltd., Shenzhen, Guangdong 518101 (CN)
(72) Inventor: XU, Tonghui, Shenzhen, Guangdong 518101 (CN)
(74) Representative: Porta & Consulenti Associati S.p.A.
(86) International application number: PCT/CN2023/142435
(87) International publication number: WO 2025/112153

(57) **Abstract**

The embodiments of the present application belong to the technical field of battery maintenance. Provided are a battery data updating apparatus, a battery data updating method, and a device and a storage medium. The battery data updating apparatus comprises: a scanning module, which is used for scanning a target battery pack to acquire identification information of the target battery pack; a control and processing module, which is connected to the scanning module to acquire the identification information of the target battery pack; a first communication module, which is used for sending the identification information of the target battery pack to a target server, so as to acquire wireless communication networking information sent by the target server on the basis of the identification information of the target battery pack; and a second communication module, which is connected to the control and processing module, wherein the control and processing module controls, on the basis of the wireless communication networking information, the second communication module to establish a communication connection with a wireless communication unit in the target battery pack, and the control and processing module is further used for updating the wireless communication networking information by means of the first communication module and the second communication module. The embodiments of the present application can improve the battery data updating efficiency.

## Description

### CROSS-REFERENCE TO RELATED APPLICATION

This application is filed on the basis of Chinese patent application No. 202311621682.3 filed November 29, 2023, and claims priority to the Chinese patent application, the entire contents of which are incorporated herein by reference.

### TECHNICAL FIELD

The present disclosure relates to the technical field of battery repair, and more particularly to a method and apparatus for updating battery data, a device, and a storage medium.

### BACKGROUND

A battery repair process includes a step of updating information of a battery assembly after replacement. Due to the use of a wireless battery management system, updating of the information of the battery assembly requires using a special device to read and write battery information and a Media Access Control (MAC) address of wireless battery management system. This process is complex and affects the battery data update efficiency, thereby affecting the battery repair efficiency. Therefore, how to improve the battery data update efficiency to improve the battery repair efficiency has become an urgent technical problem to be solved.

### SUMMARY

A main objective of embodiments of the present disclosure is to provide a method and apparatus for updating battery data, a device, and a storage medium, to improve the battery data update efficiency.

To achieve the above objective, in accordance with a first aspect of the present disclosure, an embodiment provides an apparatus for updating battery data, including:
a scanning module configured for scanning a target battery pack to obtain identification information of the target battery pack;
a control processing module connected to the scanning module to acquire the identification information of the target battery pack;
a first communication module connected to the control processing module and configured for establishing a communication connection to a target server, where the first communication module is configured for sending the identification information of the target battery pack to the target server to acquire wireless communication networking information sent by the target server according to the identification information of the target battery pack; and
a second communication module connected to the control processing module, where the control processing module is configured to control, according to the wireless communication networking information, the second communication module to establish a communication connection to a wireless communication unit in the target battery pack; and
where the control processing module is further configured for updating the wireless communication networking information through the first communication module and the second communication module.

In some embodiments, the target battery pack includes at least one target battery module; the wireless communication unit includes an original first management module and an original second management module, where the original first management module is configured for connecting to the original second management module, and the original second management module is configured for managing the target battery module;
the scanning module is further configured for scanning the target battery module to acquire identification information of the target battery module; and
the control processing module is further configured for updating the identification information of the target battery module after the original second management module is replaced.

In some embodiments, the apparatus for updating battery data further includes:
a storage module connected to the control processing module and configured for storing the identification information of the target battery pack, the wireless communication networking information, and the identification information of the target battery module;
a display module connected to the control processing module; and
a system power supply module connected to the control processing module and configured for supplying electric energy to the control processing module,
where the control processing module is configured to acquire battery status information of the wireless communication unit through the second communication module, and the display module is configured for displaying the battery status information.

In some embodiments, the system power supply module includes:
a charging interface configured for connecting to an external power source;
an energy storage unit connected to the charging interface and configured for storing electric energy; and
a power supply unit connected to the charging interface and the energy storage unit, and configured for converting electric energy supplied by the external power source or the electric energy stored in the energy storage unit into a preset power supply voltage, to supply power to the control processing module according to the preset power supply voltage.

To achieve the above objective, in accordance with a second aspect of the present disclosure, an embodiment provides a method for updating battery data, applied to the apparatus for updating battery data according to the first aspect, the method including:
scanning, by the scanning module, an identifier of the target battery pack to obtain the identification information of the target battery pack;
sending, by the control processing module, the identification information of the target battery pack to the target server through the first communication module to acquire the wireless communication networking information sent by the target server according to the identification information of the target battery pack;
controlling, by the control processing module, according to the wireless communication networking information, the second communication module to establish the communication connection to the wireless communication unit in the target battery pack;
acquiring, by the control processing module, battery update information of the wireless communication unit according to an update status of the wireless communication unit; and
uploading, by the first communication module, the battery update information to the target server, so that the target server updates the wireless communication networking information according to the battery update information.

In some embodiments, the wireless communication unit includes an original first management module and an original second management module, the target battery pack includes at least one target battery module, the original second management module is configured for managing the target battery module, and the original first management module is configured for connecting to the original second management module; and the acquiring, by the control processing module, battery update information of the wireless communication unit according to an update status of the wireless communication unit includes:
scanning, by the scanning module, the target battery module to obtain identification information of the target battery module;
acquiring, by the control processing module, a first communication address of a target second management module after replacement, and binding the identification information of the target battery module to the first communication address according to a battery information update instruction to obtain first binding information, where the target second management module is configured for replacing the original second management module;
generating, by the display module, a first networking instruction in response to a networking touch operation;
performing, by the control processing module, networking of the original first management module and the target second management module according to the first networking instruction to obtain first networking data; and
obtaining, by the control processing module, the battery update information according to the first binding information and the first networking data.

In some embodiments, the acquiring, by the control processing module, battery update information of the wireless communication unit according to an update status of the wireless communication unit includes:
acquiring, by the control processing module, a second communication address of a target first management module after replacement, and binding the identification information of the target battery pack to the second communication address according to a battery information update instruction to obtain second binding information, where the target first management module is configured for replacing the original first management module;
generating, by the display module, a second networking instruction in response to a networking touch operation;
performing, by the control processing module, networking of the target first management module and the original second management module according to the second networking instruction to obtain second networking data; and
obtaining, by the control processing module, the battery update information according to the second binding information and the second networking data.

In some embodiments, the target battery pack further includes a battery cell, and the acquiring, by the control processing module, battery update information of the wireless communication unit according to an update status of the wireless communication unit includes:
acquiring, by the control processing module, battery information of the battery cell after replacement to obtain target battery status information; and
binding, by the control processing module, the original second management module to the target battery status information according to the battery information update instruction to obtain the battery update information.

In some embodiments, the method further includes:
acquiring, by the first communication module, location information of the target battery pack to obtain battery location data; and
sending, by the control processing module, the battery location data to a target server through the first communication module to acquire a communication information set sent by the target server according to the battery location data, where the communication information set includes the wireless communication networking information.

To achieve the above objective, in accordance with a third aspect of the present disclosure, an embodiment provides an electronic device, including a memory and a processor. The memory has a computer program stored therein. The computer program, when executed by the processor, causes the processor to implement the method according to the second aspect.

To achieve the above objective, in accordance with a fourth aspect of the present disclosure, an embodiment provides a computer-readable storage medium, having a computer program stored therein. The computer program, when executed by a processor, causes the processor to implement the method according to the second aspect.

The present disclosure provides the method and apparatus for updating battery data, the device, and the storage medium. The apparatus for updating battery data includes: a scanning module configured for scanning a target battery pack to obtain identification information of the target battery pack; a control processing module connected to the scanning module to acquire the identification information of the target battery pack; a first communication module connected to the control processing module and configured for establishing a communication connection to a target server, where the first communication module is configured for sending the identification information of the target battery pack to the target server to acquire wireless communication networking information, which is sent by the target server according to the identification information of the target battery pack; and a second communication module connected to the control processing module, where the control processing module is configured to control, according to the wireless communication networking information, the second communication module to establish a communication connection to a wireless communication unit in the target battery pack; and where the control processing module is further configured for updating the wireless communication networking information through the first communication module and the second communication module. As such, battery data can be updated without complex operations, thereby improving the battery data update efficiency and further improving the battery repair efficiency.

### BRIEF DESCRIPTION OF DRAWINGS

FIG. 1A is a schematic diagram of an apparatus for updating battery data according to an embodiment of the present disclosure;
FIG. 1B is a schematic diagram of a target battery pack according to an embodiment of the present disclosure;
FIG. 2 is a flowchart of a method for updating battery data according to an embodiment of the present disclosure;
FIG. 3 is a flowchart of S204 in FIG. 2;
FIG. 4 is a flowchart of a method for updating battery data according to another embodiment of the present disclosure;
FIG. 5 is a flowchart of a method for updating battery data according to another embodiment of the present disclosure;
FIG. 6 is a flowchart of a method for updating battery data according to another embodiment of the present disclosure; and
FIG. 7 is a schematic structural diagram of hardware of an electronic device according to an embodiment of the present disclosure.

### Reference numerals:

scanning module 100; control processing module 200; first communication module 300; second communication module 400; storage module 500; display module 600; system power supply module 700; charging interface 710; energy storage unit 720; power supply unit 730; target server 800.

### DETAILED DESCRIPTION

To make the objectives, technical schemes, and advantages of the present disclosure clearer, the present disclosure is described in further detail with reference to accompanying drawings and embodiments. It is to be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first," "second" and the like in the description, the claims, and the accompanying drawings are used to distinguish similar objects, and are not necessarily used to describe a specific sequence or a precedence order.

Unless otherwise defined, meanings of all technical and scientific terms used in this specification are the same as those usually understood by those having ordinary skills in the art to which the present disclosure belongs. Terms used in this specification are merely intended to describe objectives of the embodiments of the present disclosure, but are not intended to limit the present disclosure.

A battery repair process includes a step of updating information of a battery assembly after replacement. Due to the use of a wireless battery management system, updating of the information of the battery assembly requires using a special device to read and write battery information and a MAC address of wireless battery management system. This process is complex and affects the battery data update efficiency, thereby affecting the battery repair efficiency. Therefore, how to improve the battery data update efficiency to improve the battery repair efficiency has become an urgent technical problem to be solved.

A main objective of embodiments of the present disclosure is to provide a method and apparatus for updating battery data, a device, and a storage medium, to improve the battery data update efficiency.

The apparatus for updating battery data provided in the embodiments of the present disclosure will be described in detail below.

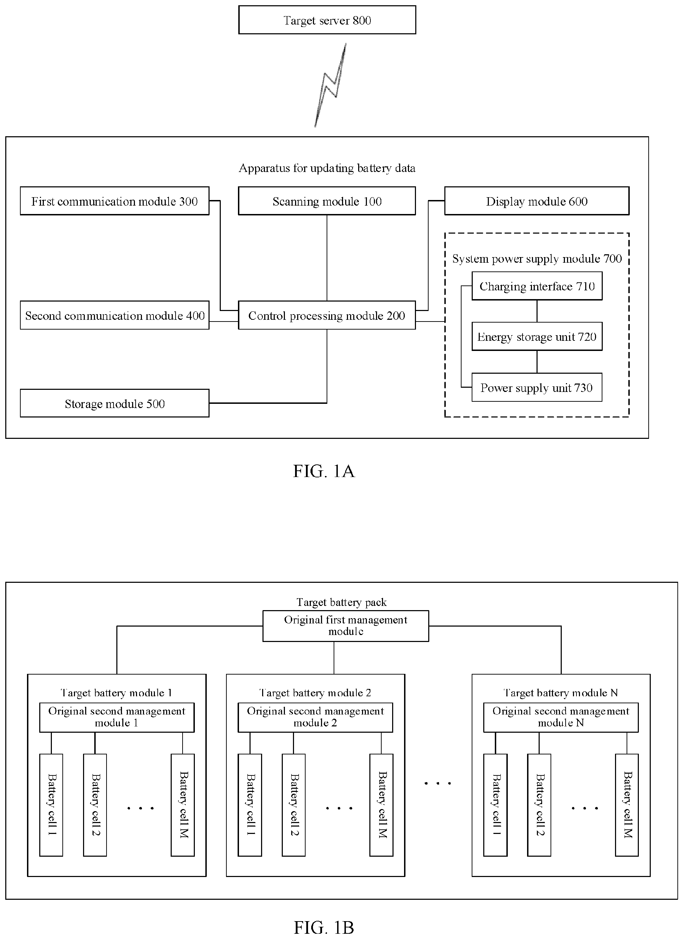

Referring to FIG. 1A, in some embodiments, the apparatus for updating battery data is configured for updating battery data during a process of repairing a target battery pack. The apparatus for updating battery data includes:
a scanning module 100 configured for scanning a target battery pack to obtain identification information of the target battery pack;
a control processing module 200 connected to the scanning module 100 to acquire the identification information of the target battery pack;
a first communication module 300 connected to the control processing module 200 and configured for establishing a communication connection to a target server 800, where the first communication module 300 is configured for sending the identification information of the target battery pack to the target server 800 to acquire wireless communication networking information sent by the target server 800 according to the identification information of the target battery pack; and
a second communication module 400 connected to the control processing module 200, where the control processing module 200 controls, according to the wireless communication networking information, the second communication module 400 to establish a communication connection to a wireless communication unit in the target battery pack; and
where the control processing module 200 is further configured for updating the wireless communication networking information through the first communication module 300 and the second communication module 400.

It should be noted that after the control processing module 200 controls the second communication module 400 to establish a communication connection to the wireless communication unit, the battery enters the repair mode.

The repair mode is a special mode designed to limit the power output of the battery, reduce risks, and provide more time for repair and diagnosis.

It should be noted that the target server 800 may be a local server or a cloud server, which is not limited in the embodiments of the present disclosure.

The arrangement of the first communication module 300 and the second communication module 400 in the embodiments of the present disclosure is advantageous in that the first communication module 300 establishes a communication connection to the target server 800, to acquire wireless communication networking information corresponding to the identification information of the target battery pack; and the second communication module 400 establishes a communication connection with the wireless communication unit of the target battery pack according to the wireless communication networking information, so that the wireless communication networking information is updated through the first communication module 300 and the second communication module 400, to complete the repair of the faulty battery, thereby improving the battery data update efficiency and further improving the repair efficiency.

The target battery pack includes the wireless communication unit, at least one target battery module, and a plurality of battery cells. Where the wireless communication unit includes an original first management module and an original second management module.

Referring to FIG. 1B, in some embodiments, the target battery pack includes one original first management module, N original second management modules, and N*M battery cells, where each original second management module manages one target battery module, and each target battery module includes M battery cells; and the original first management module is connected to the N original second management modules, and is configured for managing the N original second management modules.

In some embodiments, the number of original first management modules may be more than one, and the number of original second management modules may be one or more. The specific number of original first management modules and the number of original second management modules are not limited in the embodiments of the present disclosure.

Specifically, the original second management module sends at least the following information to the original first management module:
battery cell status information, including parameters such as voltage, temperature, and remaining capacity of each battery cell, to monitor the working status and health status of each battery cell;
fault information, where when a battery cell has a fault or anomaly, the original second management module sends a corresponding fault code or alarm information to the original first management module for timely fault diagnosis and processing;
battery balancing information, where if there is a voltage or capacity difference between different battery cells in the target battery module, the original second management module sends information related to a balancing operation to the original first management module to achieve battery balancing control;
charging/discharging control information, where the original second management module sends related parameters, states, and control commands in the charging and discharging process to the original first management module to achieve charging/discharging control and management of the target battery module; and
communication status information, where the original second management module sends status information of communication with the original first management module to the original first management module, including communication quality, connection status, etc., to ensure normal data transmission and communication.

It should be noted that monitoring, control, and management of the battery can be implemented according to the information sent by the original second management module to the original first management module, thereby improving the safety, reliability, and performance of the battery.

Specifically, a first identifier is provided on the target battery pack, and by scanning the first identifier with the scanning module 100, the identification information of the target battery pack can be obtained and transmitted to the control processing module 200.

It should be noted that the first identifier may be a barcode or a two-dimensional code, which is not limited in the embodiments of the present disclosure.

The identification information of the target battery pack is essentially a piece of encoded data containing specific information, and represents a communication address of the original first management module. The control processing module 200 sends the identification information of the target battery pack to the target server 800 through the first communication module 300 to acquire wireless communication networking information sent by the target server 800 according to the identification information of the target battery pack.

The wireless communication networking information includes, but is not limited to, a communication address of the original first management module and a communication address of the original second management module.

In an embodiment, the scanning module 100 is further configured for scanning the target battery module to acquire identification information of the target battery module; and
the control processing module 200 is further configured for updating the identification information of the target battery module after the original second management module is replaced.

Specifically, a second identifier is provided on the target battery module, and by scanning the second identifier with the scanning module 100, the identification information of the target battery module can be obtained and transmitted to the control processing module 200.

It should be noted that the second identifier may be a barcode or a two-dimensional code, which is not limited in the embodiments of the present disclosure.

In an embodiment, after a technician replaces the original second management module with a target second management module, the scanning module 100 scans the second identifier of the target battery module to obtain the identification information of the target battery module, then acquires a communication address of the target second management module, and establishes a binding relationship between the identification information of the target battery module and the communication address of the target second management module to obtain battery binding information; and the control processing module 200 sends the battery binding information to the target server 800 through the first communication module 300, enabling the target server 800 to update the identification information of the target battery pack according to the battery binding information. As such, the battery data update efficiency is improved, thereby further improving the repair efficiency.

In the embodiments of the present disclosure, through the communication connection between the apparatus for updating battery data and the faulty battery, the battery information of the faulty battery can be quickly acquired, and during the process of repairing the faulty battery, the fault information of the battery can be quickly updated, and battery data in the target server 800 can also be quickly updated, thus completing the repair of the faulty battery. As such, the battery data update efficiency is improved, thereby improving the repair efficiency.

In some embodiments, the apparatus for updating battery data further includes:
a storage module 500 connected to the control processing module 200 and configured for storing the identification information of the target battery pack, the wireless communication networking information, and the identification information of the target battery module;
a display module 600 connected to the control processing module 200; and
a system power supply module 700 connected to the control processing module 200 and configured to supply electric energy to the control processing module 200,
where the control processing module 200 acquires battery status information of the wireless communication unit through the second communication module 400, and the display module 600 is configured for displaying the battery status information. As such, the technician can determine whether a repair operation is required according to the battery status information displayed on the display module 600, and use the apparatus for updating battery data to update data after repair or replacement.

In an embodiment, the storage module 500 further stores battery information of all batteries in a current battery placement area, the battery information includes a communication address and battery status information, and the first communication module 300 acquires location information of the target battery pack through global positioning system (GPS) positioning according to the battery information, thus obtaining battery location data; and the control processing module 200 sends the battery location data to the target server 800 through the first communication module 300 to acquire a communication information set sent by the target server 800 according to the battery location data, where the communication information set includes the wireless communication networking information.

Specifically, the storage module 500 may be configured for storing battery update information related to a battery that has been repaired when a network connection between the apparatus for updating battery data and a network is interrupted, and automatically uploading the battery update information to the target server 800 through the first communication module 300 after the network connection is restored, so that the target server 800 updates the wireless communication networking information according to the battery update information.

It should be noted that the network may be a 3G network, a 4G network, a 5G network, or the like, which is not limited in the embodiments of the present disclosure.

It should be noted that the display module 600 may further be configured for interaction, i.e., acquire an operation such as a touch operation or a mouse operation performed by a technician on the display module 600, generate an instruction such as a battery information update instruction or a networking instruction according to the operation, and update the wireless communication networking information of the battery stored in the target server 800 under a control logic of the instruction. As such, the battery data update efficiency is improved, thereby improving the battery repair efficiency.

When the apparatus for updating battery data is in communication connection with the original first management module and the original second management module, a networking relationship of the management modules, a module status of each management module, and the battery status information of the wireless communication unit are all displayed on the display module 600 for a technician to quickly acquire detailed information of the faulty battery and then repair the faulty battery.

In an embodiment, the control processing module 200 establishes a communication connection to N original second management modules through the second communication module 400 to acquire status information of corresponding battery cells managed by the N original second management modules, thus obtaining the battery status information.

In some embodiments, the system power supply module 700 includes:
a charging interface 710 configured for connecting to an external power source;
an energy storage unit 720 connected to the charging interface 710 and configured for storing electric energy; and
a power supply unit 730 connected to the charging interface 710 and the energy storage unit 720, and configured for converting electric energy supplied by the external power source or the electric energy stored in the energy storage unit 720 into a preset power supply voltage, to supply power to the control processing module 200 according to the preset power supply voltage.

It should be noted that the charging interface 710 is connected to the energy storage unit 720 and is configured for charging the energy storage unit 720, and when the energy storage unit 720 is fully charged, the charging interface 710 is changed to directly supply electric energy to the power supply unit 730.

In an embodiment, the energy storage unit 720 adopts a detachable battery design, so that when the energy storage unit 720 of the apparatus for updating battery data is exhausted, the energy storage unit 720 can be quickly replaced with a new one. The replacement process is convenient and quick, and a case where the repair cannot be carried out due to the lack of electric energy can be avoided, so that the use experience of repair personnel is improved.

When the charging interface 710 is not connected to an external power source, the energy storage unit 720 can transmit electric energy to the power supply unit 730, so that the power supply unit 730 converts the electric energy stored in the energy storage unit 720 into the preset power supply voltage, and supplies power to the control processing module 200 according to the preset power supply voltage, to implement power distribution and management for the scanning module 100, the first communication module 300, the second communication module 400, the storage module 500, the display module 600, and other modules to ensure the normal operation of each module.

It should be noted that the apparatus for updating battery data may be a handheld device having a high degree of integration, which can implement battery data update for the repaired battery in an offline state while ensuring flexibility, greatly improving the efficiency of updating battery data, thereby improving the efficiency of battery repair.

In addition, the apparatus for updating battery data in the form of a handheld device can be used in various application scenarios outside a repair workshop, thereby greatly increasing the possibility of battery repair business and improving the repair experience.

The method for updating battery data provided in the embodiments of the present disclosure will be described in detail below.

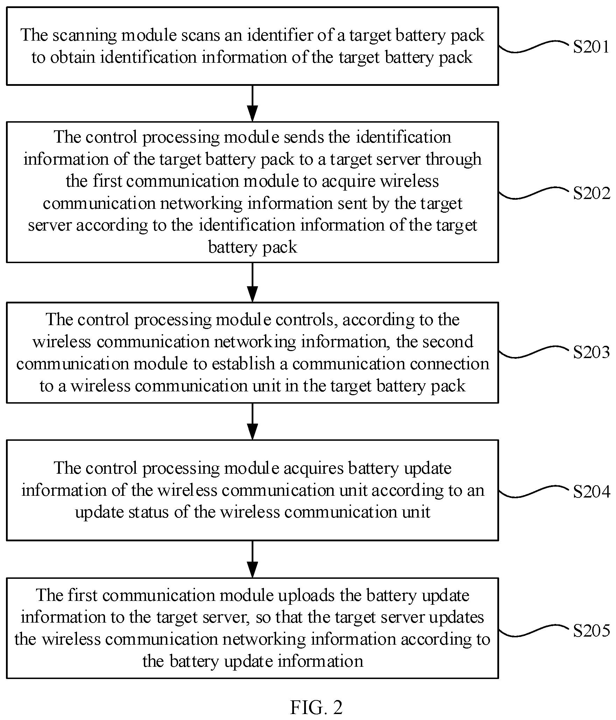

Referring to FIG. 2, in some embodiments, the method for updating battery data is applied to the apparatus for updating battery data according to any one of the above embodiments, and is used for updating battery data during a process of repairing a target battery pack. The method for updating battery data includes, but is not limited to, the following steps S201 to S205.

At S201, the scanning module scans an identifier of a target battery pack to obtain identification information of the target battery pack.

At S202, the control processing module sends the identification information of the target battery pack to a target server through the first communication module to acquire wireless communication networking information sent by the target server according to the identification information of the target battery pack.

At S203, the control processing module controls, according to the wireless communication networking information, the second communication module to establish a communication connection to a wireless communication unit in the target battery pack.

At S204, the control processing module acquires battery update information of the wireless communication unit according to an update status of the wireless communication unit.

At S205, the first communication module uploads the battery update information to the target server, so that the target server updates the wireless communication networking information according to the battery update information.

In an embodiment, the target battery pack includes one original first management module, N original second management modules, and N*M battery cells, where each original second management module manages one target battery module, and each target battery module includes M battery cells; and the original first management module is configured for managing the N original second management modules. For example, the target battery pack is provided with a corresponding first identifier, and the identification information of the target battery pack corresponds to the original first management module and the original second management modules. For example, the target battery module is also provided with a corresponding second identifier, and the identification information of the target battery module corresponds to the original second management module.

It should be noted that when the scanning module 100 scans the first identifier of the target battery pack, the identification information of the target battery pack can be obtained, where the identification information of the target battery pack is correspondingly an information code of the wireless communication unit of the target battery pack, so that wireless communication networking information corresponding to the target battery pack may be acquired from the target server 800 according to the information code of the wireless communication unit of the target battery pack.

In some embodiments, in S202, the control processing module 200 sends the identification information of the target battery pack to the target server 800 through the first communication module 300, the target server 800 finds the corresponding wireless communication networking information through search according to the identification information of the target battery pack and sends the wireless communication networking information to the first communication module 300, and the wireless communication networking information is then stored in the storage module 500.

In an embodiment, the target server 800 further sends battery status information of the target battery pack stored in the target server 800 to the first communication module 300, and the battery status information is then stored in the storage module 500.

In some embodiments, the wireless communication unit includes an original first management module and an original second management module, the target battery pack includes at least one target battery module, the original second management module is configured for managing the target battery module, and the original first management module is configured for connecting to the original second management module; and the wireless communication networking information includes a communication address of the original first management module and a communication address of the original second management module. S203 may include, but is not limited to, the following operations:
controlling, by the control processing module according to a communication address of the original first management module, the second communication module to establish a communication connection to the original first management module; and
controlling, by the control processing module according to a communication address of the original second management module, the second communication module to establish a communication connection to the original second management module.

It should be noted that after the control processing module 200 establishes a communication connection to the original first management module and the original second management module through the second communication module 400, the target battery pack enters the repair mode.

In an embodiment, the control processing module 200 establishes a communication connection to N original second management modules through the second communication module 400 to acquire status information of corresponding battery cells managed by the N original second management modules.

In some embodiments, the control processing module 200 controls, according to the wireless communication networking information, the second communication module 400 to establish a communication connection to a communication address of the original first management module and communication addresses of the N original second management modules to acquire complete information of the entire target battery pack, and displays the complete information through the display module 600, for repair personnel to determine whether a repair operation is required according to the displayed content.

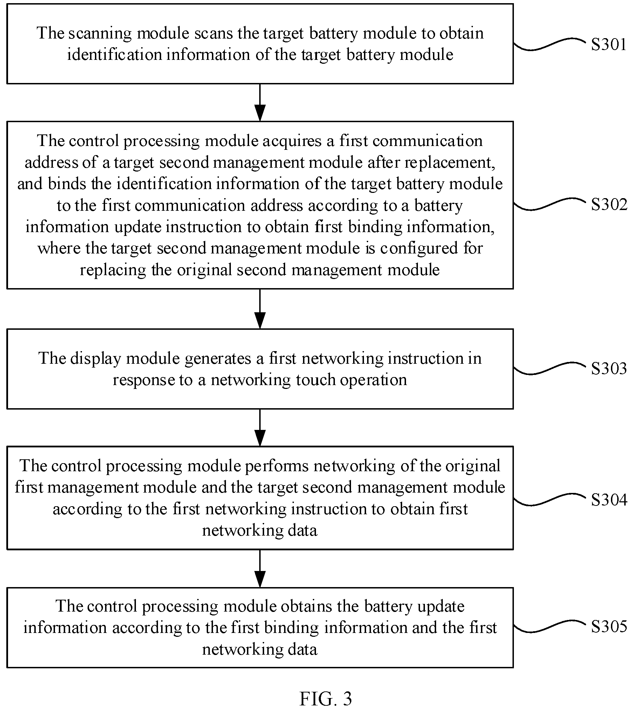

Referring to FIG. 3, in some embodiments, a faulty original second management module is repaired, and data update processing is performed. S204 may include, but is not limited to, the following steps S301 to S305.

At S301, the scanning module scans the target battery module to obtain identification information of the target battery module.

At S302, the control processing module acquires a first communication address of a target second management module after replacement, and binds the identification information of the target battery module to the first communication address according to a battery information update instruction to obtain first binding information, where the target second management module is configured for replacing the original second management module.

At S303, the display module generates a first networking instruction in response to a networking touch operation.

At S304, the control processing module performs networking of the original first management module and the target second management module according to the first networking instruction to obtain first networking data.

At S305, the control processing module obtains the battery update information according to the first binding information and the first networking data.

In some embodiments, in S301 to S305, the scanning module scans the target battery module to obtain identification information of the target battery module. The control processing module 200 acquires a first communication address of a target second management module that replaces the original second management module, and binds the identification information of the target battery module to the first communication address according to a battery information update instruction to obtain first binding information. The display module 600 generates a first networking instruction in response to a networking touch operation. The control processing module 200 performs networking of the original first management module and the target second management module according to the first networking instruction to obtain first networking data. As such, networking of the target second management module and the original first management module after repair can be implemented without complex operations. Finally, the control processing module 200 obtains the battery update information according to the first binding information and the first networking data. This facilitates updating the wireless communication networking information on the target server 800 according to the battery update information, thereby improving the battery data update efficiency and further improving the battery repair efficiency.

In some embodiments, after S304, the method may further include: displaying, by the display module, the first networking data, where the first networking data includes information such as a first networking success indication and a first network connection relationship.

In some embodiments, one or X (X<N) original second management modules among the N original second management modules are faulty. After one or more faulty original second management modules are repaired or replaced, a binding relationship needs to be established between the identification information of each target battery module and the first communication address of each target second management module after replacement to obtain the first binding information; networking of the original first management module, the non-faulty original second management modules, and the one or more target second management modules needs to be performed to obtain the first networking data; and finally the battery update information is obtained according to the first binding information and the first networking data and sent to the target server 800, so that the target server 800 updates the wireless communication networking information on the target server according to the battery update information.

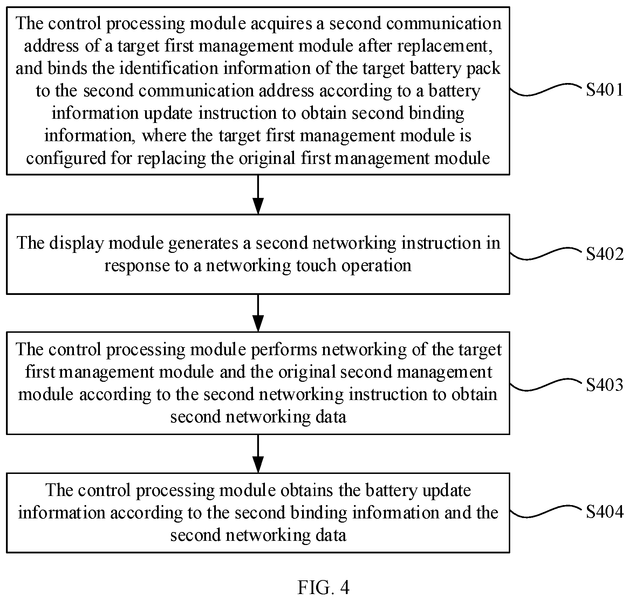

Referring to FIG. 4, in some embodiments, the faulty original first management module is repaired, and data update processing is performed. S204 further includes, but is not limited to, the following steps S401 to S404.

At S401, the control processing module acquires a second communication address of a target first management module after replacement, and binds the identification information of the target battery pack to the second communication address according to a battery information update instruction to obtain second binding information, where the target first management module is configured for replacing the original first management module.

At S402, the display module generates a second networking instruction in response to a networking touch operation.

At S403, the control processing module performs networking of the target first management module and the original second management module according to the second networking instruction to obtain second networking data.

At S404, the control processing module obtains the battery update information according to the second binding information and the second networking data.

In some embodiments, in S401 to S404, after a technician replaces the original first management module with a target first management module, the control processing module acquires a second communication address of the target first management module, and binds the identification information of the target battery pack to the second communication address according to a battery information update instruction to obtain second binding information. The display module 600 generates a second networking instruction in response to a networking touch operation. At S403, the control processing module 200 performs networking of the target first management module and the original second management module according to the second networking instruction to obtain second networking data. As such, networking of the target first management module and the original second management module after repair can be implemented without complex operations. Finally, the control processing module 200 obtains the battery update information according to the second binding information and the second networking data. This facilitates updating the wireless communication networking information on the target server 800 according to the battery update information, thereby improving the battery data update efficiency and further improving the battery repair efficiency.

In some embodiments, after S403, the method may further include: displaying, by the display module, the second networking data, where the second networking data includes information such as a second networking success indication and a second network connection relationship.

The control processing module 200 sends the second binding information and the second networking data to the target server 800 through the first communication module 300, so that the target server 800 performs battery data update according to the second binding information and the second networking data, to indicate that the target first management module and the original second management module are arranged in one battery. As such, data update for the target first management module and battery data update for the wireless communication networking information stored in the target server 800 can be implemented without complex operations, thereby improving the battery data update efficiency and further improving the battery repair efficiency.

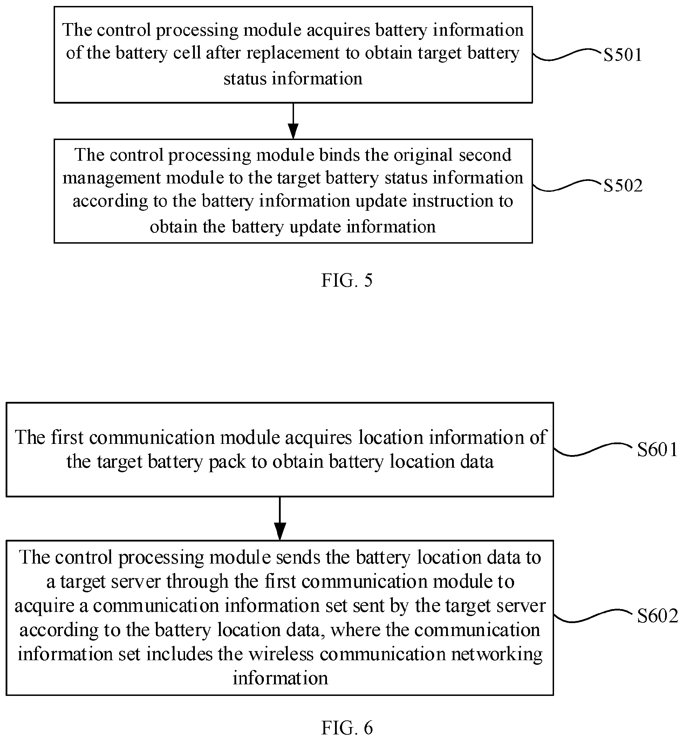

Referring to FIG. 5, in some embodiments, the target battery pack further includes a battery cell, and the original second management module is configured for managing a plurality of battery cells. When a battery cell in the target battery pack is faulty and needs to be repaired, S204 may further include, but is not limited to, the following steps S501 to S502.

At S501, the control processing module acquires battery information of the battery cell after replacement to obtain target battery status information.

At S502, the control processing module binds the original second management module to the target battery status information according to the battery information update instruction to obtain the battery update information.

In some embodiments, in S501 to S502, after a technician replaces the faulty battery cell with a new battery cell, the control processing module 200 acquires battery information of the new battery cell to obtain the target battery status information. Then, the control processing module 200 binds the original second management module to the target battery status information according to the battery information update instruction to obtain the battery update information. As such, the binding of the battery information of the new battery cell to the original second management module can be implemented without complex operations, thus achieving battery data update. Therefore, the battery repair efficiency is improved.

It should be noted that S301 to S305, S401 to S404, and S501 to S502 respectively represent data update operations in repair processes corresponding to a case where an original second management module is faulty, a case where the original first management module is faulty, and a case where a battery cell is faulty. In the repair processes corresponding to all the above cases, the battery update information can be acquired without complex operations, thus implementing data update for the repaired battery and battery data update for the wireless communication networking information stored in the target server 800, thereby improving the battery data update efficiency and further improving the battery repair efficiency.

Referring to FIG. 6, in some embodiments, the method for updating battery data may further include, but is not limited to, the following steps S601 to S602.

At S601, the first communication module acquires location information of the target battery pack to obtain battery location data.

At S602, the control processing module sends the battery location data to a target server through the first communication module to acquire a communication information set sent by the target server according to the battery location data, where the communication information set includes the wireless communication networking information.

In some embodiments, in S601 to S602, the first communication module 300 acquires location information of the target battery pack through GPS positioning to obtain battery location data, and then acquires, from the target server 800 according to the battery location data, a communication information set of all batteries in an area where the target battery pack is located, where the communication information set includes the wireless communication networking information.

Specifically, there is a faulty target battery pack among the batteries in the area where the target battery pack is located. S601 to S602 are advantageous in that the first communication module 300 acquires the wireless communication networking information of each battery in advance; even if a network connection between the apparatus for updating battery data and a network is interrupted, data update can be performed for the repaired battery, and battery update data is temporarily stored in the storage module 500; and after the network connection is restored, the first communication module 300 sends the battery update data in the storage module 500 to the target server 800, thus implementing battery data update for the wireless communication networking information stored in the target server 800, thereby improving the battery data update efficiency and further improving the battery repair efficiency.

In some embodiments, the target server 800 further sends battery data of all batteries in the area where the target battery pack is located to the first communication module 300 according to the battery location data.

In some embodiments, all operation instructions for updating the battery data are generated by a technician by touching the display module 600 with a hand, and the battery data can be updated quickly without requiring any other additional instrument or operation.

In some embodiments, the method for updating battery data may further include:
performing, by the control processing module, fault detection on battery status information to obtain battery fault information; and
performing, by the display module, a display operation according to the battery status information and the battery fault information.

The displaying of the battery fault information and the battery status information enables a technician to determine whether a repair operation is required according to the fault information displayed on the display module 600, and use the apparatus for updating battery data to update data after repair or replacement.

An embodiment of the present disclosure further provides an electronic device, including a memory and a processor. The memory has a computer program stored therein. The computer program, when executed by the processor, causes the processor to implement the method for updating battery data. The electronic device may include any smart terminal such as a tablet computer or an in-vehicle computer.

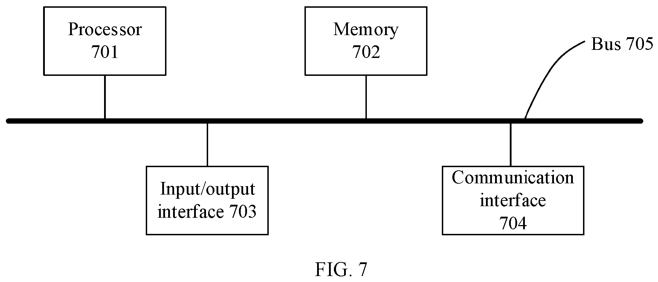

FIG. 7 shows a hardware structure of an electronic device according to another embodiment. Referring to FIG. 7, the electronic device includes a processor 701, a memory 702, an input/output interface 703, a communication interface 704, and a bus 705.

The processor 701 may be implemented by a general-purpose Central Processing Unit (CPU), a microprocessor, an Application Specific Integrated Circuit (ASIC), or one or more integrated circuits, and is configured for executing a related program to implement the technical schemes provided by the embodiments of the present disclosure.

The memory 702 may be implemented in the form of a Read Only Memory (ROM), a static storage device, a dynamic storage device, a Random Access Memory (RAM), etc. The memory 702 may store an operating system and other application programs. When the technical schemes provided by the embodiments of the present disclosure are implemented by software or firmware, related program code is stored in the memory 702, and is called by the processor 701 to execute the method for updating battery data according to the embodiments of the present disclosure.

The input/output interface 703 is configured for enabling input and output of information.

The communication interface 704 is configured for realizing communication interaction between the electronic device and other devices, either through wired communication (e.g., USB, network cable, etc.) or through wireless communication (e.g., mobile network, Wi-Fi, Bluetooth, etc.).

The bus 705 is configured for transmitting information between components of the electronic device (such as the processor 701, the memory 702, the input/output interface 703, and the communication interface 704).

The processor 701, the memory 702, the input/output interface 703, and the communication interface 704 are in communication connection with each other inside the electronic device through the bus 705.

An embodiment of the present disclosure further provides a computer-readable storage medium, storing a computer program which, when executed by a processor, causes the processor to implement the method for updating battery data.

The memory, as a non-transitory computer-readable storage medium, may be configured for storing a non-transitory software program and a non-transitory computer-executable program. In addition, the memory may include a high speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but are not limited to, the Internet, an intranet, a local area network, a mobile communication network, and combinations thereof.

The contents described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of technologies and the emergence of new application scenarios, the technical schemes provided in the embodiments of the present disclosure are also applicable to similar technical problems.

Those having ordinary skills in the art may understand that the technical scheme shown in the drawings does not constitute a limitation to the embodiments of the present disclosure, and more or fewer steps than those shown in the drawings may be included, or some steps may be combined, or different steps may be used.

The apparatus embodiments described above are merely examples. The units described as separate components may or may not be physically separated, i.e., may be located in one place or may be distributed over a plurality of network units. Some or all of the modules may be selected according to actual needs to achieve the objectives of the schemes of the embodiments of the present disclosure.

Those having ordinary skills in the art can understand that all or some of the steps in the methods disclosed above and the functional modules/units in the system and the apparatus can be implemented as software, firmware, hardware, and appropriate combinations thereof.

In the specification and accompanying drawings of the present disclosure, the terms "first", "second", "third", "fourth", and so on (if any) are intended to distinguish between similar objects but do not necessarily indicate a specific order or sequence. It is to be understood that the data termed in such a way are interchangeable in appropriate circumstances, so that the embodiments of the present disclosure described herein can be implemented in orders other than the order illustrated or described herein. Moreover, the terms "include," "comprise," and any other variants thereof mean are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

It is to be understood that in the present disclosure, "at least one" means one or more and "a plurality of' means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relationship between the associated objects. "At least one of" and similar expressions refer to any combination of items listed, including one item or any combination of a plurality of items. For example, at least one of a, b, or c may represent a, b, c, "a and b", "a and c", "b and c", or "a, b, and c", where a, b, and c may be singular or plural.

In the several embodiments provided in the present disclosure, it is to be understood that the disclosed apparatus and method may be implemented in other manners. For example, the described apparatus embodiments are only exemplary. For example, the division of the units is merely a logical function division and other division manners may be used in practical implementations. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position, or may be distributed on a plurality of network units. Some or all of the units may be selected according to actual needs to achieve the objects of the scheme of this embodiment.

In addition, functional units in the embodiments of the present disclosure may be integrated into one processing unit, or each of the units may exist alone physically, or two or more units may be integrated into one unit. The integrated unit may be implemented in a form of hardware, or may be implemented in a form of a software functional unit.

The integrated unit may be stored in a computer-readable storage medium if implemented in the form of a software functional unit and sold or used as an independent product. Based on such an understanding, the technical schemes of the present disclosure essentially, or the part contributing to the related art, or all or some of the technical schemes may be implemented in the form of a software product. The software product is stored in a storage medium, and includes several instructions for instructing a computer device (which may be a personal computer, a server, a network device, or the like) to execute all or some of the steps of the methods described in the embodiments of the present disclosure. The storage medium includes: any medium that can store program code, such as a USB flash drive, a removable hard disk, a read-only memory (ROM), a random access memory (RAM), a magnetic disk, or an optical disk.

Although some embodiments of the present disclosure are described above with reference to the accompanying drawings, these embodiments are not intended to limit the protection scope of the embodiments of the present disclosure. Any modifications, equivalent replacements and improvements made by those having ordinary skills in the art without departing from the scope and essence of the embodiments of the present disclosure shall fall within the protection scope of the embodiments of the present disclosure.

## Claims

1. An apparatus for updating battery data, comprising:
a scanning module configured for scanning a target battery pack to obtain identification information of the target battery pack;
a control processing module connected to the scanning module to acquire the identification information of the target battery pack;
a first communication module connected to the control processing module and configured for establishing a communication connection to a target server, wherein the first communication module is configured for sending the identification information of the target battery pack to the target server to acquire wireless communication networking information sent by the target server according to the identification information of the target battery pack; and
a second communication module connected to the control processing module, wherein the control processing module is configured to control, according to the wireless communication networking information, the second communication module to establish a communication connection to a wireless communication unit in the target battery pack; and
wherein the control processing module is further configured for updating the wireless communication networking information through the first communication module and the second communication module.

2. The apparatus for updating battery data of claim 1, wherein the target battery pack comprises at least one target battery module; the wireless communication unit comprises an original first management module and an original second management module, wherein the original first management module is configured for connecting to the original second management module, and the original second management module is configured for managing the target battery module;
the scanning module is further configured for scanning the target battery module to acquire identification information of the target battery module; and
the control processing module is further configured for updating the identification information of the target battery module after the original second management module is replaced.

3. The apparatus for updating battery data of claim 2, further comprising:
a storage module connected to the control processing module and configured for storing the identification information of the target battery pack, the wireless communication networking information, and the identification information of the target battery module;
a display module connected to the control processing module; and
a system power supply module connected to the control processing module and configured for supplying electric energy to the control processing module,
wherein the control processing module is configured to acquire battery status information of the wireless communication unit through the second communication module, and the display module is configured for displaying the battery status information.

4. The apparatus for updating battery data of claim 3, wherein the system power supply module comprises:
a charging interface configured for connecting to an external power source;
an energy storage unit connected to the charging interface and configured for storing electric energy; and
a power supply unit connected to the charging interface and the energy storage unit, and configured for converting electric energy supplied by the external power source or the electric energy stored in the energy storage unit into a preset power supply voltage, to supply power to the control processing module according to the preset power supply voltage.

5. A method for updating battery data, applied to the apparatus for updating battery data of any one of claims 1 to 4, the method comprising:
scanning, by the scanning module, an identifier of the target battery pack to obtain the identification information of the target battery pack;
sending, by the control processing module, the identification information of the target battery pack to the target server through the first communication module to acquire the wireless communication networking information sent by the target server according to the identification information of the target battery pack;
controlling, by the control processing module, according to the wireless communication networking information, the second communication module to establish the communication connection to the wireless communication unit in the target battery pack;
acquiring, by the control processing module, battery update information of the wireless communication unit according to an update status of the wireless communication unit; and
uploading, by the first communication module, the battery update information to the target server, so that the target server updates the wireless communication networking information according to the battery update information.

6. The method of claim 5, wherein the wireless communication unit comprises an original first management module and an original second management module, the target battery pack comprises at least one target battery module, the original second management module is configured for managing the target battery module, and the original first management module is configured for connecting to the original second management module; and the acquiring, by the control processing module, battery update information of the wireless communication unit according to an update status of the wireless communication unit comprises:
scanning, by the scanning module, the target battery module to obtain identification information of the target battery module;
acquiring, by the control processing module, a first communication address of a target second management module after replacement, and binding the identification information of the target battery module to the first communication address according to a battery information update instruction to obtain first binding information, wherein the target second management module is configured for replacing the original second management module;
generating, by the display module, a first networking instruction in response to a networking touch operation;
performing, by the control processing module, networking of the original first management module and the target second management module according to the first networking instruction to obtain first networking data; and
obtaining, by the control processing module, the battery update information according to the first binding information and the first networking data.

7. The method of claim 6, wherein the controlling, by the control processing module, according to the wireless communication networking information, the second communication module to establish the communication connection to the wireless communication unit in the target battery pack comprises:
controlling, by the control processing module according to a communication address of the original first management module, the second communication module to establish a communication connection to the original first management module; and
controlling, by the control processing module according to a communication address of the original second management module, the second communication module to establish a communication connection to the original second management module.

8. The method of claim 6, wherein the acquiring, by the control processing module, battery update information of the wireless communication unit according to an update status of the wireless communication unit comprises:
acquiring, by the control processing module, a second communication address of a target first management module after replacement, and binding the identification information of the target battery pack to the second communication address according to a battery information update instruction to obtain second binding information, wherein the target first management module is configured for replacing the original first management module;
generating, by the display module, a second networking instruction in response to a networking touch operation;
performing, by the control processing module, networking of the target first management module and the original second management module according to the second networking instruction to obtain second networking data; and
obtaining, by the control processing module, the battery update information according to the second binding information and the second networking data.

9. The method of claim 6, wherein the target battery pack further comprises a battery cell, and the acquiring, by the control processing module, battery update information of the wireless communication unit according to an update status of the wireless communication unit comprises:
acquiring, by the control processing module, battery information of the battery cell after replacement to obtain target battery status information; and
binding, by the control processing module, the original second management module to the target battery status information according to the battery information update instruction to obtain the battery update information.

10. The method of claim 5, further comprising:
acquiring, by the first communication module, location information of the target battery pack to obtain battery location data; and
sending, by the control processing module, the battery location data to a target server through the first communication module to acquire a communication information set sent by the target server according to the battery location data, wherein the communication information set comprises the wireless communication networking information.

11. The method of claim 5, further comprising:
performing, by the control processing module, fault detection on battery status information to obtain battery fault information; and
performing, by the display module, a display operation according to the battery status information and the battery fault information.

12. An electronic device, comprising a memory and a processor, wherein the memory is configured for storing a computer program, and wherein the computer program, when executed by the processor, causes the processor to perform the method of any one of claims 5 to 11.

13. A computer-readable storage medium, having a computer program stored therein, wherein the computer program, when executed by a processor, causes the processor to perform the method of any one of claims 5 to 11.
